# EUROPEAN PATENT SPECIFICATION

(11) **EP 3 475 803 B1**
(45) Date of publication and mention of the grant of the patent: **14.02.2024**
(21) Application number: 16907182.6
(22) Date of filing: 28.06.2016
(51) Int. Cl.: G06F 3/06, G06K 19/07, G06K 7/10, H04L 9/08, G06F 16/41

(54) **DISTRIBUTED CONTENT DELIVERY**
VERTEILTE INHALTSBEREITSTELLUNG
DISTRIBUTION DE CONTENU DISTRIBUÉ

(43) Date of publication of application: 01.05.2019
(73) Proprietor: Nokia Technologies Oy, 02610 Espoo (FI)
(72) Inventor: PYLKKÄNEN, Tom, 20780 Kaarina (FI)
(74) Representative: Swindell & Pearson Limited
(86) International application number: PCT/FI2016/050467
(87) International publication number: WO 2018/002408

(56) References cited:
- EP-A1- 1 705 826
- US-A1- 2008 115 045
- US-A1- 2008 316 031
- US-A1- 2009 085 724

## Description

### FIELD

The present invention relates to management and/or dissemination of digital content.

### BACKGROUND

Digital content may comprise, for example, digital photographs, scanned documents, television programmes, movies, industrial data, medical data and/or consumer-generated video files. Such content may be stored in servers, cloud storage services and consumer devices. Examples of consumer devices include smartphones, universal serial bus, USB, memory sticks and external magnetic hard drives.

Digital content items may vary in size, for example, a photograph obtained with a one-megapixel sensor has a smaller size than a high-resolution digital video file. Furthermore, as sensor resolutions have increased, file sizes have tended to increase over the years. As also content consumption devices develop, they become enabled to present ever more sophisticated content to consumers. Televisions, for example, have developed to encompass higher resolutions, from high definition, HD, to so-called 4k definition.

HD content, and even more so 4k content, has a large file size. To deliver such content to televisions, sufficient bandwidth must be available and allocated to provision of such content. For example, optic fibre networks may be built in urban areas to enable 100-megabit connections, sufficient for conveying even very high resolution content.

Consumers with cloud storage accounts may find they are only able to store a limited number of content items of high-resolution content in their accounts before exhausting the storage capacity allocated to them. So-called 8k resolution, having four times the number of pixels of 4k resolution, and sixteen times the number of pixels of full HD resolution, presents new storage and transmission challenges going even beyond those presented by 4k resolution.

Combined transmission may comprise that part of the content is retrieved via a first path and part via a second path, for example, in case a high-bandwidth Internet connection is available, a section of a content item may be retrieved from a cloud storage service, with a further section brought with a portable storage element, which need not be capable of storing the entire content item.

US2009/085724 discloses an audio and/or video media content providing device includes a controller, such as a server, that is responsive to RFID tag based information obtained from a remote RFID enabled media object. The controller is operative to facilitate access to media content associated with a stored periodically changing media content list. For example, a content registry database may be periodically updated through a suitable user interface to change a link between content identification information read from a remote RFID enabled media object, with media application information so that the same RFID tag may allow the downloading of different media. The link between the content ID and the media ID may be dynamically changed through the controller. This may be advantageous, to provide for example, a Top 10 song card or other RFID enabled object that stays the same but can be used to securely download different media over time.

### SUMMARY OF THE INVENTION

The scope of protection sought for various embodiments of the invention is set out by the independent claims. The dependent claims define certain optional and/or advantageous features of the invention.

### BRIEF DESCRIPTION OF THE DRAWINGS

FIGURE 1 illustrates an example system in accordance with at least some embodiments of the present invention;
FIGURE 2 illustrates an example of a content item with a layered structure;
FIGURE 3 illustrates an example apparatus capable of supporting at least some embodiments of the present invention;
FIGURE 4 illustrates signalling in accordance with at least some embodiments of the present invention, and
FIGURE 5 is a flow graph of a method in accordance with at least some embodiments of the present invention.

### EMBODIMENTS

By delivering a content item via two routes, security and convenience may be enhanced. A cloud service may be used to communicate a major part of the content item, the major part not being usable on its own, while a minor part is conveyed via a portable device. The major part and the minor part may be combined at a receiving device, to obtain the usable, entire content item. Retrieving of the major part from the cloud service to the receiving device may be triggered by a same proximity interaction as is used to retrieve the minor part from the portable device to the receiving device.

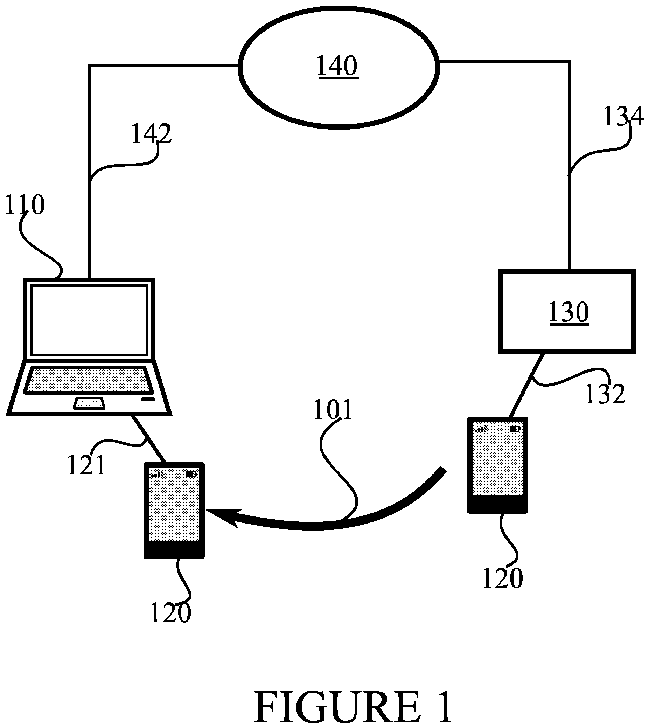

FIGURE 1 illustrates an example system in accordance with at least some embodiments of the present invention. The system comprises an originating entity 130, which may comprise, for example, a computer, video recorder, smartphone, tablet device or, in general, a digital content source. Originating entity 130 may be configured to store or access a content item, which originating entity may have generated or otherwise obtained, or which originating entity 130 may be configured to obtain.

A content item in this regard comprises a digital content item, wherein the content item is an image or video file. The content item may comprise, for example, a 4k or 8k resolution video file, such as a movie. As such, the content item may comprise sensitive or secret information, such as personal, industrial or medical information.

Future virtual reality-based applications may present large content items, for example, a doctor may be enabled to virtually navigate inside blood vessels of a patient to determine their condition. The higher is the resolution used in a virtual reality application, the more immersive and thus useful the application may be, at the cost of higher file sizes which are correspondingly more challenging to transmit from one place to another.

Communicating the content item from originating entity 130 to a receiving device 110 may be desired for any of a number of reasons. For example, a consumer may move a video captured with his camera to his desktop or laptop computer.

Receiving device 110 may comprise a laptop computer, tablet computer, desktop computer, workstation, process control console or another kind of suitable, connected device.

The content item may be communicated, or transferred, from originating entity 130 to receiving device 110 via two routes, namely via network 140 and via portable device 120. The content item is divided into two parts, of which a first part may be communicated via network 140 and a second part via portable device 120. In other words, the entire content item is not communicated in its entirety via either route alone. The first part may be a major part and the second part may be a minor part, in other words, a larger part of the content item may be communicated via network 140 than via portable device 120. For example, the major part may represent over 50 percent, over 95 percent or over 99 percent of the quantity of data in the content item. Further, a map part may optionally be generated, which comprises information usable in reconstructing the content item from the first part and the second part.

Dividing the content item into the first part and the second part is based at least partly on a layered structure of the content item. The content item has a layered structure, like, for example, jpeg 2000 images, and one layer is provided as the second part and other layers are provided as the first part. Dividing the content item into the first part and the second part constitutes an implicit or explicit encryption operation. An implicit encryption operation occurs where the first part cannot be used without the second part, wherein no encryption algorithm is used, rather, the effect is obtained by separating data comprised in the content item to the first and second parts. For example, the content item may comprise an m+1 layer as the original content item, such that the content has a pyramid-like structure. Data of the content item is built into layers, for example m+1 layers, wherein layers m-1... layer 0 may exist in each of the layer m's macro cells. An explicit encryption operation comprises use of an encryption algorithm, such as, for example, triple-DES, 3DES, or advanced encryption standard, AES.

Encryption may then be performed separately in each of the layer m's cells and their sub-cells. Layer m+1 may be the original content item and the map part, where present, may include information on how layer m is built to start the encryption and the data transfer phase.

The encryption may be built in such a way that a multi-layer encoding method is possible. That is, the encoding may be built so that the decoding can be done either by layer-to-layer, in m steps with m+1 layers, or multi-layer-to-multi-layer, wherein a decryption key is built by combining decryption keys from multiple layers to speed up decryption.

If decryption acts like an equation like, for example, (((aⱼ*bₘ₋₁)+(aᵢ*bₘ₋₁)*bₘ₋₁₊₁)+ ((aₖ*bₘ₋₁)+(a₁*bₘ₋₁)*bₘ₋₁₊₁))*bₘ₋₁₊₂ where a's are the decryptable info and b's are the keys then it may be possible to build the encryption so that the b's can be combined to decrypt the data.

When the first part is created, it may comprise layer m-1 data, and when decryption begins, per a decision of local storage size, portable device 120 may carry information on layer m+1 to m-x and then less data is available for an unauthorized person to attempt to access the contents of the content item from network 140.

Portable device 120 may store, in the second part, a small part of sub-cells of all selected layers, and initial decrypting information concerning layer m+1.

Communicating the first part via network 140 comprises transmitting the first part to network 140, and obtaining the first part to receiving device 110 from network 140. For example, a server or cloud storage service, or in general a network location may be employed as an intermediate location to store the first part in network 140. From the point of view of receiving device 110, the intermediate location is a network source from where the first part is obtained. Receiving device 110 may, in some embodiments, retrieve the first part from originating entity 130 via network 140, without the first part being specifically stored in network 140 in an intermediate location. In this latter case, originating entity 130 is from the point of view of receiving device 110 the network location from where the first part is obtained, that is, a network source.

Network 140 may comprise, in general, the Internet, a corporate network, and/or a combination or concatenation of networks. Originating entity 130 may be operably connected with network 140 via connection 134. Connection 134 may comprise, at least partly, an Ethernet, optic fibre and/or wireless connection, for example. Receiving device 110 may be operably connected with network 140 via connection 142. Connection 142 may comprise, at least partly, an Ethernet, optic fibre and/or wireless connection, for example. Connections 134 and 142 need not be of a same type.

Communicating the second part via portable device 120 comprises delivering the second part, and, optionally, the map part, to portable device 120 via connection 132. Connection 132 may comprise a suitable connection type, such as USB, Bluetooth, Bluetooth-low energy, BTLE, RFID, infrared or a cable connection. The second part, and, optionally, the map part, may then be stored in portable device 120, which a user may physically transport to a same location as where receiving device 110 is located.

Portable device 120 may comprise a USB memory stick, smartphone, smart jewellery or a smart watch, for example. In general, portable device 120 comprises memory and circuitry enabling it to transmit and receive information. As the second part may represent a minor part of the content item, portable device 120 need not, at least in some embodiments, have a very large memory. When dividing the content item to the first and second parts, originating entity 130 may decide on a division based at least partly on a usable memory capacity of portable device 120. In detail, the division may be designed to utilize fully an available memory capacity of portable device 120 in generating the second part, with the rest of the content item being relegated to the first part, for communication via network 140.

Once portable device 120 has the second part, and optionally also the map part, it may be moved to the location where receiving device 110 is located. Such a move is schematically illustrated in FIGURE 1 as move 101. At receiving device 110, portable device 120 participates in a proximity interaction 121 with receiving device 110. Proximity interaction 121 may be based on, for example, at least one of the following: a near field communication, NFC, interaction, Bluetooth interaction, an infra-red interaction, a Bluetooth low-energy interaction, a radio frequency identification, RFID, interaction and a cable interaction. In general, proximity interaction 121 may be short-range, wherein short range may mean, for example, a range of at most ten meters, at most one meter or less than ten centimeters. Proximity interaction 121 may be a touch interaction, requiring physical contact between portable device 120 and receiving device 110. Proximity interaction 121 may be based on electromagnetic waves.

Responsive to a determination, in receiving device 110, that proximity interaction 121 with portable device 120 has occurred, or is occurring, receiving device 110 obtains the second part from portable device 120, and the first part from the network source. As described above, the network source may comprise a source in network 140, or originating entity 130, for example. Receiving device 110 may determine the network source based on information it obtains via proximity interaction 121 from portable device 120. For example, the map part, where such is present, may comprise information enabling receiving device 110 to retrieve the first part from the network source, or portable device 120 may otherwise hold such information. For example, a network address, network address-network port combination or cloud service logon information may enable fetching of the first part, from the network source, by receiving device 110.

The information enabling the fetching of the first part may comprise a password. The information enabling the fetching may comprise information concerning a way in which segments of the first part are deposited in a network cloud service, in case the first part is not monolithically stored as a single file, which might be very large. In some embodiments, the information enabling the fetching comprises account information of the user of portable device 120, receiving device 110 and/or originating entity 130. The account information may comprise logon information to a cloud storage service, or, alternatively or additionally, the account information may comprise login information to a credential storage service, such that login information of a cloud storage service may be obtained from the credential storage service using the login information of the credential storage service.

A connection between receiving device 110 and the network source may be encrypted, such as, for example, by the hypertext transfer protocol, HTTP, over transport layer security, TLS, HTTPS, protocol in case the first part is obtained from a cloud storage service with a web-based interface.

Once in possession of the first part and the second part, receiving device 110 reconstructs the content item from the parts. The reconstructing may be based at least partly on information obtained from the map part, in embodiments which use a map part. The reconstructing may constitute implicit or explicit decryption of the implicit or explicit encryption operation involved in the dividing of the content item into the first part and the second part in the originating entity. In some embodiments, the reconstruction and/or decryption may be performed as a background process in real-time or almost real-time, such that presentable data becomes available almost at once, when proximity interaction 121 takes place.

In some embodiments, receiving device 110 is automatically prompted to begin rendering the content item to the user, as a response to determining the proximity interaction. For example, responsive to the proximity interaction, receiving device may trigger the fetching of the first part from the network source concurrently with starting a computer program in receiving device 110 that is enabled to render the content item to the user. Thus, for example, a fetch of the first part may be initiated over file transfer protocol, FTP, concurrently with starting a virtual reality program, responsive to the proximity interaction. Thus delay is minimized, as the computer program is started while the first part is being fetched from the network source.

Overall a technical advantage may be obtained, wherein a large content item may be transferred in a secure manner using a portable device with a relatively low memory capability. Proximity interaction 121 provides the advantage the user may have similar access to the content item wherever he might be, as the proximity interaction triggers fetching of the first part from the network source into receiving device 110.

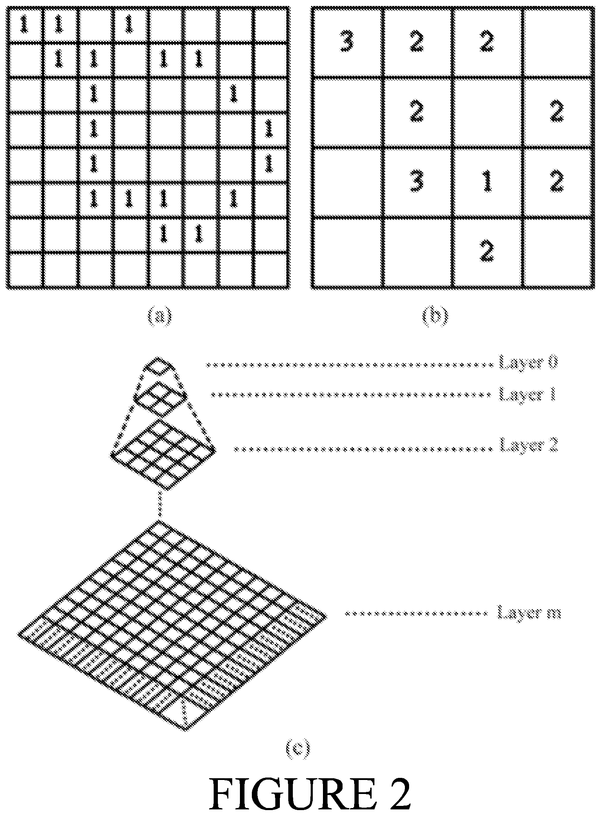

FIGURE 2 illustrates an example of a content item with a layered structure. In general in a layered media format, data is built up so that image quality will increase monotonically with each layer, and image distortion will shrink from layer to layer. Thus, layers define progression by image quality within a code stream. The layers of FIGURE 2 provide incremental addition of information.

In general, the second part is used in the absence of the first part, because the content has a layered structure. The second part comprises information that is usable as a lower resolution, and the content item is an image or video file. Receiving device 110 is configured to provide a preview of the content item at the lower resolution.

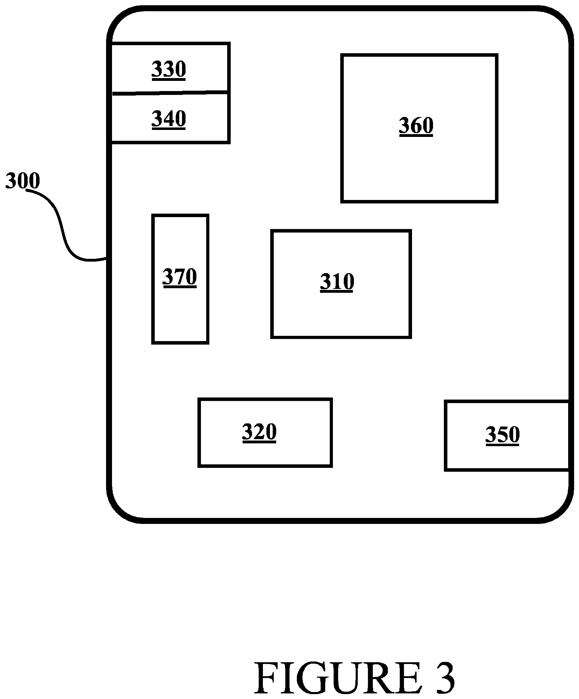

FIGURE 3 illustrates an example apparatus capable of supporting at least some embodiments of the present invention. Illustrated is device 300, which may comprise, for example, a receiving device 110 of FIGURE 1. Comprised in device 300 is processor 310, which may comprise, for example, a single- or multi-core processor wherein a single-core processor comprises one processing core and a multi-core processor comprises more than one processing core. Processor 310 may comprise more than one processor. A processing core may comprise, for example, a Cortex-A8 processing core manufactured by ARM Holdings or a Steamroller processing core produced by Advanced Micro Devices Corporation. Processor 310 may comprise at least one Qualcomm Snapdragon, Intel Core and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, long term evolution, LTE, IS-95, wireless local area network, WLAN, Ethernet and/or worldwide interoperability for microwave access, WiMAX, standards, for example.

Device 300 may comprise a proximity transceiver 350. Proximity transceiver 350 may support at least one proximity technology, such as NFC, Bluetooth, BTLE, RFID, Wibree or similar technologies. Proximity transceiver may be configured to enable device 300 to participate in proximity interactions.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to interact with content items.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a user identity module 370.

Processor 310, memory 320, transmitter 330, receiver 340, proximity transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

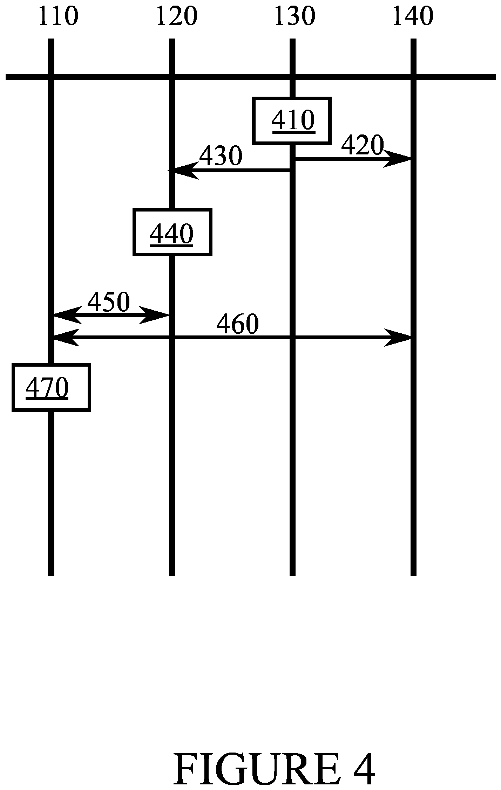

FIGURE 4 illustrates signalling in accordance with at least some embodiments of the present invention. On the vertical axes are disposed, from the left to the right, receiving device 110, portable device 120, originating entity 130 and network 140. Time advances from the top toward the bottom.

In phase 410, originating entity 130 divides the content item into a first part and a second part, as described above. The first part is delivered to an intermediate location in network 140 in phase 420, and the second part is delivered to portable device 120 in phase 430. In phase 430, optionally, also a map part may be delivered to portable device 120, as described above.

As described above, the content item may comprise HD video, 4k video, or 8k video, for example.

In phase 440, portable device 120 is moved to a location where receiving device 120 is present, as illustrated by arrow 101 in FIGURE 1. For example, a user may take portable device 120 with him as he leaves work, or an office where originating entity 130 is located.

In phase 450, a proximity interaction takes place between portable device 120 and receiving device 110, as described above. The proximity interaction may be triggered by the user touching receiving device 110 with portable device 120, for example. In the proximity interaction, the second part, and optionally a map part are transferred from portable device 120 to receiving device 110. Alternatively to touching, the proximity interaction may be triggered by a discovery procedure, which discovers that receiving device 110 and portable device 120 are within range of the proximity interaction from each other. This may, depending on the embodiment, require that receiving device 110 and portable device 120 have been previously paired with each other in accordance with a suitable pairing process.

In response to the proximity interaction of phase 450, receiving device, in phase 460, retrieves the second part of the content item from the intermediate location in network 140. As described above, in other embodiments there is no intermediate location, but the second part of the content item is retrieved by receiving device 110 from originating entity 130. The retrieving of phase 460, whether from an intermediate location in network 140 or originating entity 130, is based on information obtained from portable device 120 over proximity interaction 450.

In phase 470 receiving device 110, being in possession of the first part, the second part and, optionally, the map part, may reconstruct the content item. The reconstructed content item may, optionally, be rendered to a user, for example.

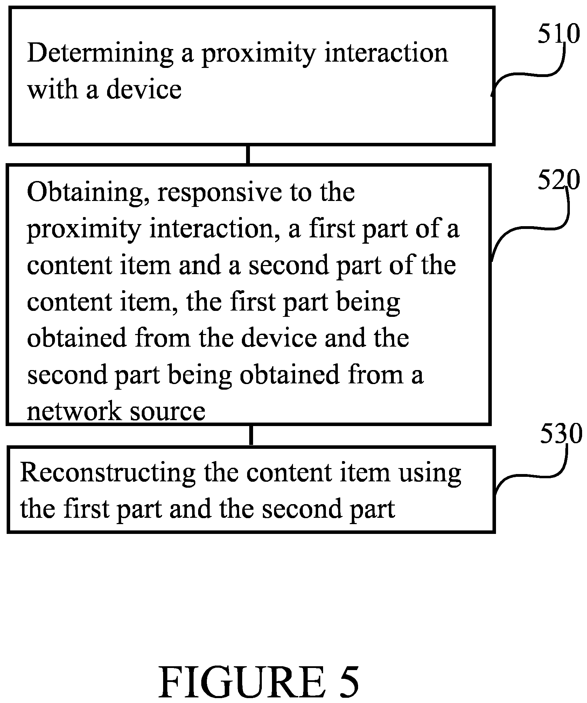

FIGURE 5 is a flow graph of a method in accordance with at least some embodiments of the present invention. The phases of the illustrated method may be performed in receiving device 110, or in a control device configured to control the functioning thereof, when implanted therein.

Phase 510 comprises determining a proximity interaction with a device. Phase 520 comprises obtaining, responsive to the proximity interaction, a first part of a content item and a second part of the content item, the first part being obtained from the device and the second part being obtained from a network source. Finally, phase 530 comprises reconstructing the content item using the first part and the second part.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in transferring large layered digital image or video files.

### ACRONYMS LIST

- 3DES: triple DES
- AES: advanced encryption standard
- BTLE: Bluetooth low-energy
- DES: data encryption standard
- FTP: file transfer protocol
- HD: high definition (e.g. television standard)
- HTTP: hypertext transfer protocol
- HTTPS: HTTP over TLS
- NFC: near field communication
- RFID: radio frequency identification
- TLS: transport layer security
- USB: universal serial bus

### REFERENCE SIGNS LIST

| | |
|---|---|
| 110 | Receiving device |
| 120 | Portable device |
| 130 | Originating entity |
| 140 | Network |
| 101 | Movement of portable device 120 |
| 121 | Proximity interaction |
| 132, 134, 142 | Connections |
| 300 | Device of FIGURE 3 |
| 310 - 370 | Structure of device 300 |
| 410 - 470 | Phases of the method of FIGURE 4 |
| 510 - 530 | Phases of the method of FIGURE 5 |

## Claims

1. An apparatus (110, 300) comprising:
- means (350) for determining a proximity interaction (121) with a device (120);
- means (350, 340) for obtaining, responsive to the proximity interaction, a second part of a content item and a first part of the content item, wherein the content item is an image or video file, wherein the content item has a layered structure, wherein one layer is provided as the second part and other layers are provided as the first part, wherein the second part of the content item comprises a lowered resolution preview of the content item, the content item having been divided into the first and second parts wherein dividing the content item into the first and second parts constitutes an encryption operation, the second part being obtained from the device and the first part being obtained from a network source (130, 140) based on information obtained via the proximity interaction with the device;
- means (310) for reconstructing the content item using the first part and the second part; and
- means for rendering the lowered resolution preview of the content item comprised in the second part, without using the first part.

2. The apparatus (110, 300) according to any preceding claim, wherein the first part comprises more than half of the content item.

3. The apparatus (110, 300) according to claim 2, wherein the first part comprises more than 99 percent of the content item.

4. The apparatus (110, 300) according to any preceding claim, comprising means for:
using the second part as a decryption key in the reconstructing of the content item; and/or
rendering the content item to a user via a web browser program.

5. The apparatus (110, 300) according to any preceding claim, wherein the proximity interaction comprises at least one of the following: a near field communication interaction, Bluetooth interaction, an infra-red interaction, a Bluetooth low-energy interaction, a radio frequency identification, RFID, interaction and a cable interaction.

6. The apparatus (110, 300) according to any preceding claim, wherein the means comprises:
- at least one processor (310); and
- at least one memory (320) including computer program code, the at least one memory and computer program code configured to, with the at least one processor, cause the performance of the apparatus.

7. The apparatus (110, 300) according to any preceding claim, wherein the apparatus is: a wireless communications device, a smart phone, a laptop computer, a tablet computer, a desktop computer, a workstation or a process control console.

8. A method comprising:
- determining a proximity interaction (121) with a device (120);
- obtaining, responsive to the proximity interaction, a second part of a content item and a first part of the content item, wherein the content item is an image or video file and wherein the content item has a layered structure, wherein one layer is provided as the second part and other layers are provided as the first part, wherein the second part of the content item comprises a lowered resolution preview of the content item, the content item having been divided into the first and second parts wherein dividing the content item into the first and second parts constitutes an encryption operation, the second part being obtained from the device and the first part being obtained from a network source (130, 140) based on information obtained via the proximity interaction with the device;
- reconstructing the content item using the first part and the second part; and
- rendering the lowered resolution preview of the content item comprised in the second part, without using the first part.

9. Computer program instructions for causing an apparatus (110, 300) to perform at least the following:
- determining a proximity interaction (121) with a device (120);
- obtaining, responsive to the proximity interaction, a second part of a content item and a first part of the content item, wherein the content item is an image or video file and wherein the content item has a layered structure, wherein one layer is provided as the second part and other layers are provided as the first part, wherein the second part of the content item comprises a lowered resolution preview of the content item, the content item having been divided into the first and second parts wherein dividing the content item into the first and second parts constitutes an encryption operation, the second part being obtained from the device and the first part being obtained from a network source (130, 140) based on information obtained via the proximity interaction with the device;
- reconstructing the content item using the first part and the second part; and
- rendering the lowered resolution preview of the content item comprised in the second part, without using the first part.

## Patentansprüche

1. Einrichtung (110, 300), die Folgendes umfasst:
- Mittel (350) zum Bestimmen einer Proximitätsinteraktion (121) mit einer Vorrichtung (120);
- Mittel (350, 340) zum Erhalten eines zweiten Teils eines Inhaltselements und eines ersten Teils des Inhaltselements in Reaktion auf die Proximitätsinteraktion, wobei das Inhaltselement ein Bild oder eine Videodatei ist, wobei das Inhaltselement eine Schichtstruktur aufweist, wobei eine Schicht als der zweite Teil bereitgestellt ist und andere Schichten als der erste Teil bereitgestellt sind, wobei der zweite Teil des Inhaltselements eine Vorschau des Inhaltselements in einer verringerten Auflösung umfasst, wobei das Inhaltselement in den ersten und den zweiten Teil geteilt wurde, wobei das Teilen des Inhaltselements in den ersten und den zweiten Teil eine Verschlüsselungsoperation konstituiert, wobei der zweite Teil von der Vorrichtung erhalten wird und der erste Teil von einer Netzwerkquelle (130, 140) auf Basis von Informationen erhalten wird, die via die Proximitätsinteraktion mit der Vorrichtung erhalten werden;
- Mittel (310) zum Rekonstruieren des Inhaltselements unter Verwendung des ersten und des zweiten Teils; und
- Mittel zum Rendern der Vorschau des Inhaltselements mit verringerter Auflösung, die im zweiten Teil umfasst ist, ohne den ersten Teil zu verwenden.

2. Einrichtung (110, 300) nach einem der vorhergehenden Ansprüche, wobei der erste Teil mehr als die Hälfte des Inhaltselements umfasst.

3. Einrichtung (110, 300) nach Anspruch 2, wobei der erste Teil mehr als 99 Prozent des Inhaltselements umfasst.

4. Einrichtung (110, 300) nach einem der vorhergehenden Ansprüche, die Mittel für Folgendes umfasst:
Verwenden des zweiten Teils als einen Entschlüsselungsschlüssel beim Rekonstruieren des Inhaltselements; und/oder
Rendern des Inhaltselements via ein Webbrowserprogramm für einen Benutzer.

5. Einrichtung (110, 300) nach einem der vorhergehenden Ansprüche, wobei die Proximitätsinteraktion mindestens eines von Folgendem umfasst: eine Nahfeldkommunikationsinteraktion, eine Bluetoothinteraktion, eine Infrarotinteraktion, eine Bluetooth-Low-Energy-Interaktion, eine Funkfrequenzidentifikations(RFID)-Interaktion und eine Kabelinteraktion.

6. Einrichtung (110, 300) nach einem der vorhergehenden Ansprüche, wobei die Mittel Folgendes umfassen:
- mindestens einen Prozessor (310); und
- mindestens einen Speicher (320), der Computerprogrammcode beinhaltet, wobei der mindestens eine Speicher und der Computerprogrammcode dazu ausgelegt sind, mit dem mindestens einen Prozessor die Leistung der Einrichtung zu bewirken.

7. Einrichtung (110, 300) nach einem der vorhergehenden Ansprüche, wobei die Einrichtung Folgendes ist: eine drahtlose Kommunikationsvorrichtung, ein Smartphone, ein Laptopcomputer, ein Tabletcomputer, ein Desktopcomputer, eine Arbeitsstation oder eine Prozesssteuerkonsole.

8. Verfahren, das Folgendes umfasst:
- Bestimmen einer Proximitätsinteraktion (121) mit einer Vorrichtung (120);
- Erhalten eines zweiten Teils eines Inhaltselements und eines ersten Teils des Inhaltselements in Reaktion auf die Proximitätsinteraktion, wobei das Inhaltselement ein Bild oder eine Videodatei ist, und wobei das Inhaltselement eine Schichtstruktur aufweist, wobei eine Schicht als der zweite Teil bereitgestellt ist und andere Schichten als der erste Teil bereitgestellt sind, wobei der zweite Teil des Inhaltselements eine Vorschau des Inhaltselements in einer verringerten Auflösung umfasst, wobei das Inhaltselement in den ersten und den zweiten Teil geteilt wurde, wobei das Teilen des Inhaltselements in den ersten und den zweiten Teil eine Verschlüsselungsoperation konstituiert, wobei der zweite Teil von der Vorrichtung erhalten wird und der erste Teil von einer Netzwerkquelle (130, 140) auf Basis von Informationen erhalten wird, die via die Proximitätsinteraktion mit der Vorrichtung erhalten werden;
- Rekonstruieren des Inhaltselements unter Verwendung des ersten und des zweiten Teils; und
- Rendern der Vorschau des Inhaltselements mit verringerter Auflösung, die im zweiten Teil umfasst ist, ohne den ersten Teil zu verwenden.

9. Computerprogrammanweisungen zum Veranlassen einer Einrichtung (110, 300), mindestens Folgendes durchzuführen:
- Bestimmen einer Proximitätsinteraktion (121) mit einer Vorrichtung (120);
- Erhalten eines zweiten Teils eines Inhaltselements und eines ersten Teils des Inhaltselements in Reaktion auf die Proximitätsinteraktion, wobei das Inhaltselement ein Bild oder eine Videodatei ist, und wobei das Inhaltselement eine Schichtstruktur aufweist, wobei eine Schicht als der zweite Teil bereitgestellt ist und andere Schichten als der erste Teil bereitgestellt sind, wobei der zweite Teil des Inhaltselements eine Vorschau des Inhaltselements in einer verringerten Auflösung umfasst, wobei das Inhaltselement in den ersten und den zweiten Teil geteilt wurde, wobei das Teilen des Inhaltselements in den ersten und den zweiten Teil eine Verschlüsselungsoperation konstituiert, wobei der zweite Teil von der Vorrichtung erhalten wird und der erste Teil von einer Netzwerkquelle (130, 140) auf Basis von Informationen erhalten wird, die via die Proximitätsinteraktion mit der Vorrichtung erhalten werden;
- Rekonstruieren des Inhaltselements unter Verwendung des ersten und des zweiten Teils; und
- Rendern der Vorschau des Inhaltselements mit verringerter Auflösung, die im zweiten Teil umfasst ist, ohne den ersten Teil zu verwenden.

## Revendications

1. Appareil (110, 300) comprenant :
- des moyens (350) pour déterminer une interaction de proximité (121) avec un dispositif (120) ;
- des moyens (350, 340) pour obtenir, en réponse à l'interaction de proximité, une deuxième partie d'un élément de contenu et une première partie de l'élément de contenu, dans lequel l'élément de contenu est un fichier image ou vidéo, dans lequel l'élément de contenu a une structure en couches, dans lequel une couche est fournie en tant que deuxième partie et d'autres couches sont fournies en tant que première partie, dans lequel la deuxième partie de l'élément de contenu comprend un aperçu à résolution réduite de l'élément de contenu, l'élément de contenu ayant été divisé en première et deuxième parties, dans lequel la division de l'élément de contenu en première et deuxième parties constitue une opération de chiffrement, la deuxième partie étant obtenue à partir du dispositif et la première partie étant obtenue à partir d'une source de réseau (130, 140) sur la base d'informations obtenues via l'interaction de proximité avec le dispositif ;
- des moyens (310) pour reconstruire l'élément de contenu en utilisant la première partie et la deuxième partie ; et
- des moyens pour rendre l'aperçu à résolution réduite de l'élément de contenu compris dans la deuxième partie sans utiliser la première partie.

2. Appareil (110, 300) selon l'une des revendications précédentes, dans lequel la première partie comprend plus de la moitié de l'élément de contenu.

3. Appareil (110, 300) selon la revendication 2, dans lequel la première partie comprend plus de 99 pour cent de l'élément de contenu.

4. Appareil (110, 300) selon l'une des revendications précédentes, comprenant des moyens pour :
utiliser la deuxième partie comme clé de déchiffrement dans la reconstruction de l'élément de contenu ; et/ou
rendre l'élément de contenu à un utilisateur via un programme de navigation sur le web.

5. Appareil (110, 300) selon l'une des revendications précédentes, dans lequel l'interaction de proximité comprend au moins l'un des éléments suivants : une interaction de communication en champ proche, une interaction Bluetooth, une interaction infrarouge, une interaction Bluetooth basse énergie, une interaction d'identification par radiofréquence, RFID, et une interaction par câble.

6. Appareil (110, 300) selon l'une des revendications précédentes, dans lequel les moyens comprennent :
- au moins un processeur (310) ; et
- au moins une mémoire (320) comportant un code de programme informatique, l'au moins une mémoire et le code de programme informatique étant configurés pour, avec l'au moins un processeur, provoquer la performance de l'appareil.

7. Appareil (110, 300) selon l'une des revendications précédentes, dans lequel l'appareil est : un dispositif de communication sans fil, un téléphone intelligent, un ordinateur portable, une tablette électronique, un ordinateur de bureau, une poste informatique ou une console de contrôle de processus.

8. Procédé comprenant les étapes suivantes :
- déterminer une interaction de proximité (121) avec un dispositif (120) ;
- obtenir, en réponse à l'interaction de proximité, une deuxième partie d'un élément de contenu et une première partie de l'élément de contenu, dans lequel l'élément de contenu est un fichier image ou vidéo et dans lequel l'élément de contenu a une structure en couches, dans lequel une couche est fournie en tant que deuxième partie et d'autres couches sont fournies en tant que première partie, dans lequel la deuxième partie de l'élément de contenu comprend un aperçu à résolution réduite de l'élément de contenu, l'élément de contenu ayant été divisé en première et deuxième parties dans lequel la division de l'élément de contenu en première et deuxième parties constitue une opération de chiffrement, la deuxième partie étant obtenue à partir du dispositif et la première partie étant obtenue à partir d'une source de réseau (130, 140) sur la base d'informations obtenues via l'interaction de proximité avec le dispositif ;
- reconstruire l'élément de contenu en utilisant la première partie et la deuxième partie ; et
- rendre l'aperçu à résolution réduite de l'élément de contenu compris dans la deuxième partie sans utiliser la première partie.

9. Instructions de programme informatique pour amener un appareil (110, 300) à effectuer au moins ce qui suit :
- déterminer une interaction de proximité (121) avec un dispositif (120) ;
- obtenir, en réponse à l'interaction de proximité, une deuxième partie d'un élément de contenu et une première partie de l'élément de contenu, dans lequel l'élément de contenu est un fichier image ou vidéo et dans lequel l'élément de contenu a une structure en couches, dans lequel une couche est fournie en tant que deuxième partie et d'autres couches sont fournies en tant que première partie, dans lequel la deuxième partie de l'élément de contenu comprend un aperçu à résolution réduite de l'élément de contenu, l'élément de contenu ayant été divisé en première et deuxième parties dans lequel la division de l'élément de contenu en première et deuxième parties constitue une opération de chiffrement, la deuxième partie étant obtenue à partir du dispositif et la première partie étant obtenue à partir d'une source de réseau (130, 140) sur la base d'informations obtenues via l'interaction de proximité avec le dispositif ;
- reconstruire l'élément de contenu en utilisant la première partie et la deuxième partie ; et
- rendre l'aperçu à résolution réduite de l'élément de contenu compris dans la deuxième partie sans utiliser la première partie.
